(19) Europäisches Patentamt

European Patent Office

Office européen des brevets

(11) **EP 1 630 387 A1**

(12) **DEMANDE DE BREVET EUROPEEN**

(43) Date de publication:
**01.03.2006 Bulletin 2006/09**

(51) Int Cl.:
*F02D 41/00* (2006.01)

(21) Numéro de dépôt: **05300489.1**

(22) Date de dépôt: **20.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **24.06.2004 FR 0406901**

(71) Demandeur: **Renault s.a.s.**
**92100 Boulogne Billancourt (FR)**

(72) Inventeur: **Fontvieille, Laurent**
**91190, GIF-SUR-YVETTE (FR)**

(54) **Procédé de commande d'un débit de gaz d'échappement recirculés dans un moteur de véhicule**

(57) Dans le procédé de commande d'un moteur de véhicule, on commande un débit de gaz d'échappement recirculés en fonction d'au moins l'une des données suivantes :

- une pression dans un collecteur ;
- une pression en amont d'une turbine ; et
- une température de gaz en amont de la turbine.

Régulation d'EGR avec mesures de P2, P3 et Qair

FIG.1

**Description**

Le domaine technique auquel se rapporte l'invention est le contrôle moteur. Le contrôle moteur est la technique de gestion d'un moteur à combustion interne de véhicule avec l'ensemble de ses capteurs et actionneurs.

Dans la suite, nous présenterons le cas du moteur diesel sur lequel l'utilisation de la recirculation des gaz d'échappement (EGR) s'est généralisée. Mais l'invention peut être appliquée au cas du moteur à essence.

On connaît des moteurs dans lesquels l'ensemble des lois de contrôle commande (stratégies logicielles) et des paramètres de caractérisation (calibrations) du moteur est contenu dans un calculateur appelé UCE (unité de contrôle électronique). Dans le moteur, le turbocompresseur est composé d'une turbine et d'un compresseur dans le but d'augmenter la quantité d'air admise dans les cylindres. La turbine est placée à la sortie du collecteur d'échappement et est entraînée par les gaz d'échappement. La puissance fournie par les gaz d'échappement à la turbine peut être modulée en installant une soupape de décharge (waste gate) ou des ailettes (turbo à géométrie variable : TGV). Le compresseur est monté sur le même axe que la turbine. Il comprime l'air qui entre dans le collecteur d'admission. Un échangeur peut être placé entre le compresseur et le collecteur d'admission pour refroidir l'air à la sortie du compresseur.

Un actionneur est utilisé pour piloter l'ouverture et la fermeture de la soupape ou des ailettes. Le signal de commande de l'actionneur est fourni par l'UCE et permet d'asservir la pression dans le collecteur d'admission. La consigne de pression collecteur est calculée par l'UCE. La pression dans le collecteur est mesurée via un capteur de pression placé sur le collecteur d'admission.

La quantité d'oxydes d'azote produite par un moteur diesel est fortement liée à la composition du mélange réactif dans les cylindres du moteur en air, carburant et à la présence de gaz inertes. Ces gaz ne participent pas à la combustion et proviennent d'un circuit dérivant une partie des gaz d'échappement vers le circuit d'admission. Ce circuit constitue la recirculation des gaz d'échappement (EGR). L'EGR est assurée en mettant en communication le circuit d'échappement et le circuit d'admission via une section de passage dont la dimension est réglée par une vanne EGR. L'EGR permet de baisser la quantité d'oxydes d'azote mais elle risque d'augmenter les fumées si taux de gaz d'EGR est trop élevé. Il est donc nécessaire de calculer la quantité juste nécessaire de gaz d'EGR.

L'unité de contrôle électronique (UCE) est utilisée pour calculer les consignes de carburant à injecter et de quantité de gaz d'EGR. La quantité de carburant est limitée en fonction de la quantité d'air frais qui entre dans le moteur. Cette quantité d'air frais est soit mesurée (débitmètre), soit calculée (estimation de masse d'air).

Pour l'EGR, le besoin est le suivant : l'UCE doit calculer une consigne de débit d'EGR en fonction du point de fonctionnement du moteur et de réglages contenus en mémoire. En résumé, la mesure du débit d'air frais entrant dans le moteur est utilisée pour limiter les fumées et pour réguler l'EGR. Il est donc important d'avoir une certaine précision sur cette grandeur.

Les normes de dépollution étant de plus en plus sévères, la quantité de particules rejetées par un moteur diesel doit être de plus en plus faible. Le filtre à particules est une solution qui permet de réduire la quantité de particules rejetées dans l'environnement. Il est composé d'un ensemble de micro canaux dans lesquels une grande partie des particules se trouve piégée. Une fois le filtre plein, il faut le vider en brûlant les particules. Cette phase est appelée : « régénération ». La régénération peut être obtenue soit par un dispositif de chauffe, soit par des réglages moteur spécifiques. Le filtre à particules est placé dans la ligne d'échappement après le turbo compresseur. L'introduction d'un tel dispositif produit une augmentation de la contre-pression à l'échappement. Et cette contre-pression est d'autant plus importante que le filtre est chargé en particules. Cette contre-pression à l'échappement perturbe la régulation de l'EGR et c'est le régulateur qui doit rattraper les écarts. Le temps de réponse du régulateur n'étant pas instantané, la quantité de polluant rejetée par le moteur augmente alors.

Ainsi, l'EGR permet de réduire la production d'oxydes d'azote (*Nox*) et de maintenir un compromis avec les particules.

Dans le moteur précité, la consigne de base du débit d'air moteur est cartographiée en fonction du régime du moteur et du débit de carburant (ou du couple moteur) puis corrigée en fonction de plusieurs grandeurs physiques. Ces corrections diminuent ou augmentent la consigne de débit d'air moteur pour maintenir un niveau acceptable de polluant.

La consigne de débit d'air est définie en fonction du compromis des quantités oxyde d'azote (NOX) et de particules (PART) produites par le moteur sur des points stabilisés (régime moteur et débit carburant constants). Pour un régime moteur et un débit carburant donnés, le metteur au point identifie une quantité d'air optimisant les NOX et les PART.

Un but de l'invention est de réduire encore la quantité de polluants produite par ce type de moteur et d'améliorer le fonctionnement du moteur.

A cet effet, on prévoit selon l'invention un procédé de commande d'un moteur de véhicule dans lequel on commande un débit de gaz d'échappement recirculés en fonction d'au moins l'une des données suivantes :

- une pression dans un collecteur ;
- une pression en amont d'une turbine ; et

- une température de gaz en amont de la turbine.

Comme on le verra, ce procédé permet de :

- renforcer la régulation d'EGR vis à vis des dispersions et des dérives de la boucle ouverte ;
- Simplifier la mise au point du régulateur d'EGR ;
- Prendre en compte l'impact du filtre à particules sur la régulation d'EGR ; et
- éliminer les interactions avec la régulation de suralimentation.

Le procédé selon l'invention pourra présenter en outre au moins l'une quelconque des caractéristiques suivantes :

- on commande le débit en fonction d'un rapport entre la pression dans le collecteur et la pression en amont de la turbine ;
- on calcule la température de gaz en amont de la turbine ;
- on mesure au moins l'une des pressions dans le collecteur et en amont de la turbine ;
- on mesure une pression différentielle aux extrémités d'un conduit de recirculation des gaz d'échappement ;
- on commande le débit en fonction d'au moins l'une des données suivantes : un régime du moteur, un débit de carburant, une température d'eau du moteur, et une pression atmosphérique.
- on calcule une valeur de consigne de débit d'air frais dans le moteur ;
- on mesure un débit d'air frais dans le moteur ;
- on mesure un débit d'air frais dans le moteur au moyen d'un capteur à fil chaud ;
- on commande le débit de gaz en fonction d'une évolution d'une différence entre une valeur de consigne et une valeur mesurée concernant toutes deux un débit d'air frais dans le moteur ;
- on commande le débit de gaz en fonction d'une valeur de prépositionnement de débit de gaz d'échappement recirculés ;
- on calcule une valeur de prépositionnement de débit de gaz d'échappement recirculés en fonction d'au moins l'une des données suivantes : un régime du moteur, un débit de carburant, une température d'eau du moteur ; et une pression atmosphérique.
- on calcule une valeur de section efficace d'une vanne de recirculation des gaz d'échappement ;
- on calcule la valeur de section efficace au moyen d'une formule du type :

$$S_{EGRcons} = a * \frac{Q_{EGRcons}}{\frac{P3_{mes}}{\sqrt{T3_{esti}}} \cdot BSV\left(\frac{P2_{mes}}{P3_{mes}}\right)} \cdot N_{mot}$$

où :

- a est une constante ;
- $Q_{EGR,cons}$ est une valeur de débit de gaz d'échappement recirculés ;
- $N_{mot}$ est un régime du moteur ; et
- $P2_{mes}$ est une pression dans le collecteur ;
- $P3_{mes}$ est une pression en amont de la turbine ;
- $T3_{estim}$ est une température en amont de la turbine ;
- BSV est une fonction prédéterminée ;

- on calcule une consigne de position d'une vanne de recirculation des gaz d'échappement ; et
- on calcule la consigne de position de la vanne au moyen de la formule :

$$P_{EGR,cons} = f_{EGR,cons}(S_{EGR,cons})$$

où

- $S_{EGR,cons}$ est une valeur de section efficace de la vanne ; et
- $f_{EGR,cons}$ est une fonction prédéterminée.

On prévoit également selon l'invention un moteur de véhicule comprenant des moyens de commande d'un débit de gaz d'échappement recirculés, les moyens de commande étant agencés pour commander le débit en fonction d'au moins l'une des données suivantes :

- une pression dans un collecteur ;
- une pression en amont d'une turbine ; et
- une température de gaz en amont de la turbine.

D'autres caractéristiques et avantages de l'invention apparaîtront encore dans la description suivante d'un mode préféré de réalisation et d'une variante donnés à titre d'exemples non limitatifs en référence aux dessins annexés sur lesquels :

- la figure 1 est un schéma d'un moteur selon un mode préféré de réalisation de l'invention ;
- la figure 2 est un schéma analogue à la figure 1 montrant une variante de réalisation du moteur ;
- la figure 3 est un schéma symbolisant les grandeurs mises en oeuvre au voisinage de la vanne d'EGR dans le moteur des figures 1 et 2 ;
- la figure 4 est un organigramme illustrant le déroulement des étapes dans le présent mode de mise en oeuvre du procédé de l'invention dans le moteur des figures 1 et 2 ;
- les figures 5 à 10 sont des organigrammes illustrant le déroulement de certaines étapes de l'organigramme de la figure 4 ;
- la figure 11 est un organigramme illustrant le déroulement général des calculs mis en oeuvre dans l'organigramme de la figure 4 ; et
- les figures 12, 13 et 14 sont des courbes illustrant les performances du moteur selon l'invention.

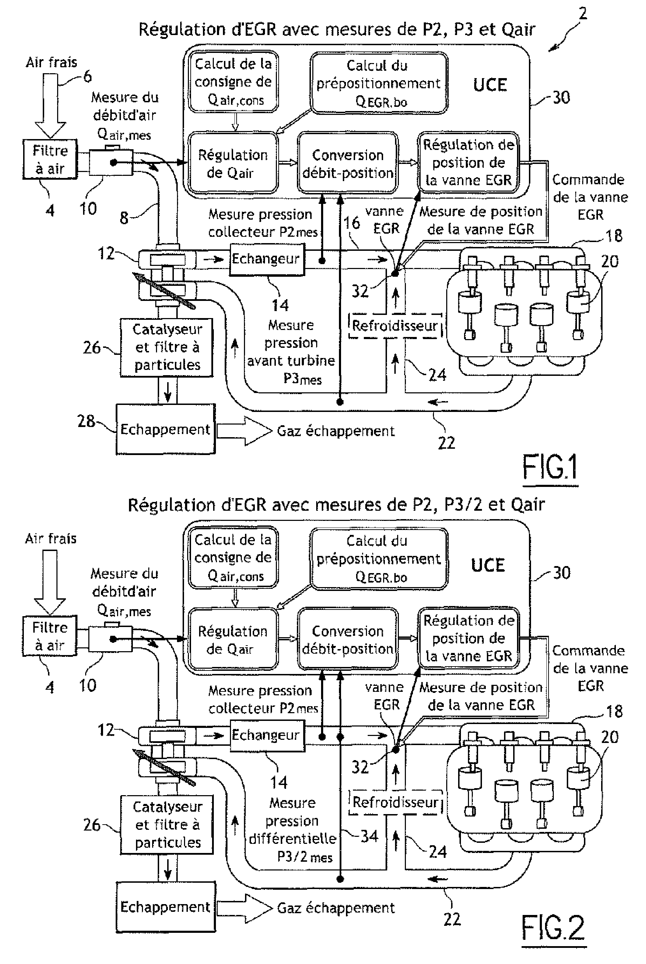

On a illustré à la figure 1 un moteur à combustion interne de type moteur diesel pour un véhicule automobile. On a essentiellement illustré sur cette figure les circulations de gaz mises en jeu dans ce moteur à l'égard du procédé de l'invention.

Le moteur comprend un filtre à air 4 se trouvant en aval d'une entrée d'air 6 et en amont d'un conduit 8 comprenant un dispositif 10 de mesure du débit d'air frais dans le conduit, débit noté $Q_{air,mes}$.

Une extrémité aval du conduit 8 communique avec la partie turbine d'un turbocompresseur 12 du moteur, laquelle communique en aval avec un échangeur 14 destiné à refroidir l'air comprimé par la turbine. Le moteur comprend un conduit 16 s'étendant en aval de l'échangeur et menant à un collecteur d'admission 18 du moteur, communiquant lui-même avec des chambres de combustion associées à quatre pistons 20, le nombre de pistons n'étant pas limitatif. Le circuit d'échappement du moteur comprend un conduit 22 dont l'extrémité amont est en communication avec le collecteur d'échappement et dont l'extrémité aval est reliée à la partie compression du turbocompresseur 12. Les gaz d'échappement servent ainsi à entraîner la turbine de compression de l'air frais.

Le moteur comprend un conduit de dérivation 24 envoyant une partie des gaz d'échappement en direction du collecteur d'admission 18 en amont de celui-ci et en aval de l'échangeur. Cette partie des gaz constitue ainsi des gaz d'échappement recirculés (EGR). La fraction de gaz d'échappement non recirculée s'écoule en aval du turbocompresseur 12 dans un catalyseur et un filtre à particules 26 du moteur, puis vers un pot d'échappement 28 pour être évacuée hors du véhicule. Le moteur comprend une vanne d'EGR 32 s'étendant à l'extrémité aval du conduit 24 qui débouche dans le conduit 16 en amont du collecteur 18.

Le moteur comprend un calculateur de type UCE portant la référence 30 et commandant le fonctionnement du moteur, en particulier le débit de gaz d'EGR.

Comme on le verra plus loin, le présent mode de mise en oeuvre du procédé de l'invention fait intervenir la mesure $Q_{air,mes}$ du débit d'air frais entrant dans le moteur. Dans le présent mode de réalisation, ce débit est mesuré par le dispositif 10 sous la forme d'un capteur à fil chaud placé en sortie du filtre à air. Le principe de mesure est d'asservir la température d'un élément chauffant placé dans le flux d'air. Le courant de chauffage est donc l'image du débit d'air frais traversant le débitmètre. La variation de courant est traduite en une tension qui est mesurable par le calculateur UCE. Une fois la tension numérisée, elle est traduite en milligrammes par coup (mg / cp) via une table de correspondance.

Le procédé fait de même intervenir la pression d'admission dans le collecteur $P2_{mes}$. Cette pression peut être mesurée par un capteur piézoélectrique. La variation de pression est traduite en une tension qui est mesurable par le calculateur. Une fois la tension numérisée, cette dernière est traduite en Pascals (Pa) via une table de correspondance.

De même, la pression en amont de la turbine $P3_{mes}$ qui intervient également dans le procédé peut être mesurée par un capteur piézoélectrique. A nouveau, la variation de pression est traduite en une tension mesurable par le calculateur. Une fois la tension numérisée, la tension est traduite en Pascal via une table de correspondance.

Le moteur illustré à la figure 2 est une variante de celui de la figure 1. Il en diffère dans la mesure où on utilise un capteur de pression différentielle P3 / $P2_{mes}$ aux bornes du circuit d'EGR, c'est-à-dire aux extrémités du conduit 24. Ce capteur permet d'améliorer la précision de mesure sur la pression en amont de la turbine. En additionnant la valeur P3 / $2_{mes}$ avec la pression d'admission dans le collecteur $P2_{mes}$, on obtient la pression en amont de la turbine.

Comme on le verra dans la suite, l'impact de la température en amont de la turbine étant du second ordre dans le procédé d'asservissement de la vanne d'EGR, la solution retenue ci-après fait seulement intervenir une estimation de la température en amont de la turbine $T3_{estim}$, et non une mesure directe de cette température.

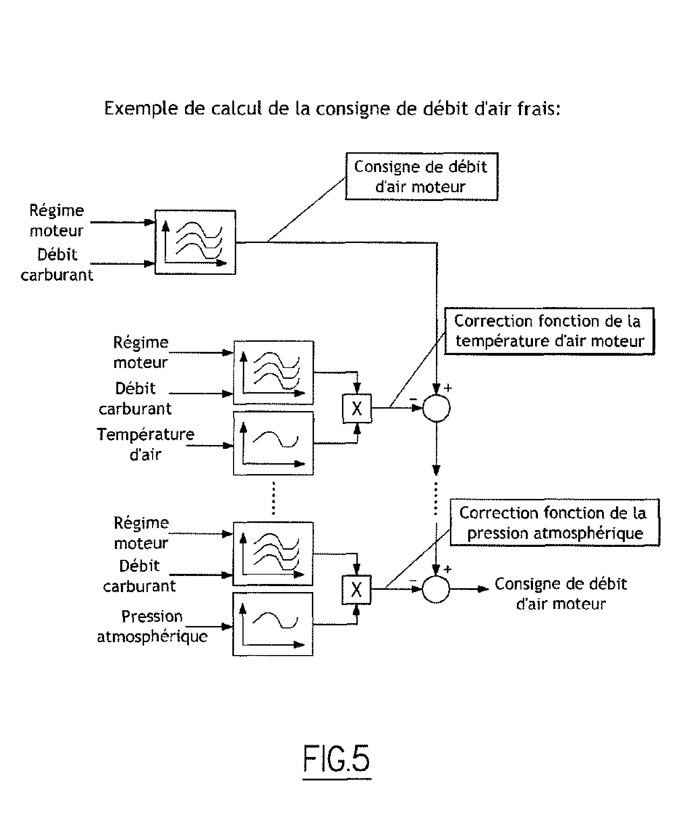

On va maintenant présenter les étapes successives de la mise en oeuvre du procédé de l'invention en référence à la figure 4. L'organigramme de la figure 4 résume l'ensemble des actions que doit réaliser l'unité de contrôle électronique en une période de calcul pour assurer une régulation d'EGR robuste.

La première étape illustrée à l'encadré 36 consiste à déterminer une consigne de débit d'air frais entrant $Q_{air,cons}$. On calcule la valeur $Q_{air,cons}$ au moyen des données suivantes :

- $N_{mot}$ : mesure du régime moteur en tours par minute ;
- $Q_{carb}$ : le débit carburant en milligrammes par cp ;
- $T_{eau}$ : la mesure de la température d'eau du moteur en degrés K ; et
- $P_{atmo}$ : la mesure de la pression atmosphérique en Pascals.

Le détail des étapes pour l'obtention de la valeur de consigne est illustré à la figure 5. Ainsi, la consigne de base du débit d'air moteur est tout d'abord cartographiée de façon connue en elle-même en fonction du régime du moteur et du débit de carburant (ou du couple moteur). Cette valeur est ensuite corrigée en fonction de plusieurs grandeurs physiques, telles que la température de l'air dans le moteur (qu'on pourra prendre égale à la température de l'eau du moteur), ou la pression atmosphérique. Ces valeurs entraînent des corrections successives de la valeur précédemment obtenue jusqu'à génération de la valeur de consigne $Q_{air,cons}$. Ainsi, ces corrections diminuent ou augmentent la consigne de débit d'air moteur pour maintenir un niveau acceptable de polluants.

Dans l'étape ultérieure illustrée dans l'encadré 38, le calculateur calcule la différence $\varepsilon_{Q\,air}$ qui correspond à l'erreur de débit d'air en milligrammes par cp. Cette grandeur constitue la différence entre le débit d'air de consigne et le débit d'air mesuré. La mesure du débit d'air $Q_{air,mes}$ a été obtenue au moyen du dispositif 10, comme expliqué plus haut.

Un but du régulateur est de minimiser en permanence l'écart entre ces deux valeurs. A cette fin, le régulateur fait intervenir un processus de type PID (Proportionnel Intégral Dérivé). L'étape 40 qui suit consiste donc en le calcul des termes proportionnel, intégral et dérivé sur l'erreur $\varepsilon$. Cette étape fait intervenir trois constantes prédéterminées $K_P$, $K_I$ et $K_D$ associées respectivement aux termes proportionnel, intégral et dérivé. Les trois paramètre K correspondent aux gains des parties respectives.

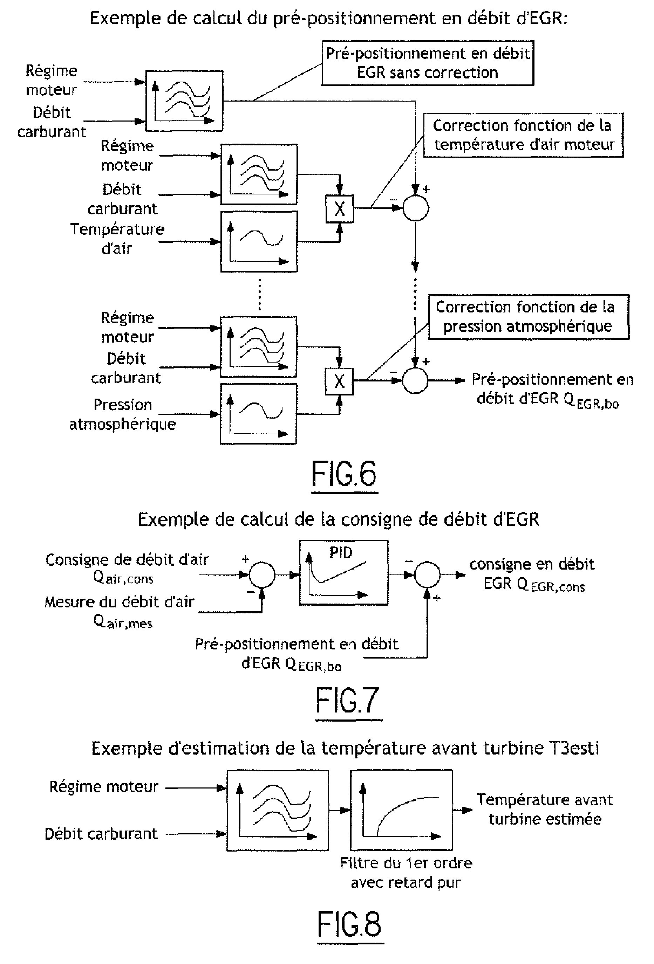

Pour améliorer le temps de réponse de la boucle de régulation, une valeur de prépositionnement $Q_{EGR,bo}$ de la vanne d'EGR est ajoutée dans le présent exemple à la partie PID du régulateur. Cette valeur de prépositionnement est obtenue à partir d'une cartographie en régime moteur et débit carburant. Cette étape de calcul de la valeur de prépositionnement correspond à l'encadré 42 sur la figure 4. Ainsi, la valeur de prépositionnement $Q_{EGR,bo}$ est calculée à partir des grandeurs $N_{mot}$, $Q_{carb}$, $T_{eau}$, et $P_{atmo}$ déjà présentées. Le calcul détaillé de la valeur de prépositionnement est similaire à celui de la consigne de débit d'air frais et est présenté à la figure 6. Il fait intervenir un premier calcul au moyen du régime moteur et du débit carburant qui mène à une valeur qui est successivement corrigée au moyen d'autres données, telles que la température d'air et la pression atmosphérique. Ainsi, le prépositionnement de base en débit d'EGR est cartographié en fonction du régime moteur et du débit carburant (ou du couple moteur), puis corrigé en fonction de plusieurs grandeurs physiques. Ces corrections diminuent ou augmentent le prépositionnement en débit d'EGR pour maintenir un niveau acceptable de polluants.

A l'encadré 44, on calcule ensuite la consigne en débit d'EGR $Q_{EGR,cons}$. La consigne en débit est obtenue en soustrayant à la valeur de prépositionnement les termes proportionnel, intégral et dérivé calculés à l'étape 40. Le schéma de calcul de la consigne en débit d'EGR est présenté à la figure 7. On observera que, dans les modes de réalisation ici décrits, le régulateur est de type PID. Cependant, l'invention peut être appliquée très facilement quel que soit le type de régulateur.

Avant la mise en oeuvre de l'étape 46 illustrée sur l'organigramme, le calculateur procède à l'estimation de la température en amont de la turbine $T3_{esti}$. Cette estimation peut être faite à partir d'une cartographie fonction du régime moteur et du débit carburant. En pratique, on préfère en l'espèce retarder de 1,5 tours du moteur la sortie de cette cartographie pour prendre en compte le cycle à quatre temps du moteur. Cette sortie est ensuite filtrée pour simuler l'inertie thermique du collecteur d'échappement. Le schéma d'obtention de cette valeur estimée de température est illustré à la figure 8.

On fournit ci-après quelques explications préalables à la présentation de l'étape 46 proprement dite. La relation qui lie le débit d'EGR $Q_{EGR}$ avec la section efficace de la vanne d'EGR 32 est exprimée par la formule de Barré Saint Venant (BSV).

$$Q_{EGR} = S_{EGR} \cdot \frac{P3_{mes}}{\sqrt{R_{air} \cdot T3}} \cdot \sqrt{\gamma_{air}\left(\frac{2}{\gamma_{air}-1}\right)\cdot\left[\left(\frac{P2_{mes}}{P3_{mes}}\right)^{\frac{2}{\gamma_{air}}} - \left(\frac{P2_{mes}}{P3_{mes}}\right)^{\frac{\gamma_{air}+1}{\gamma_{air}}}\right]}$$

avec

$R_{air}$ = constante massique de l'air = 287,

$\gamma_{air}$ = Rapport de chaleur spécifique de l'air =1.4.

Cette formule permet de calculer le débit d'EGR, $Q_{EGR}$, à partir de la pression en amont de la turbine $P3_{mes}$, de la pression du collecteur d'admission $P2_{mes}$ et de la température en amont de la turbine T3 ainsi que de la section efficace de la vanne d'EGR $S_{EGR}$.

En pratique, on utilise cette formule sous une forme simplifiée en remplaçant le calcul de la racine carrée par une table d'une fonction BSV connue en elle-même ayant pour variable le rapport de pression $P2_{mes}$ / $P3_{mes}$. La formule simplifiée est :

$$Q_{EGR} = S_{EGR}\left(P_{EGR}\right) \cdot \frac{P3_{mes}}{\sqrt{T3}} \cdot BSV\left(\frac{P2_{mes}}{P3_{mes}}\right)$$

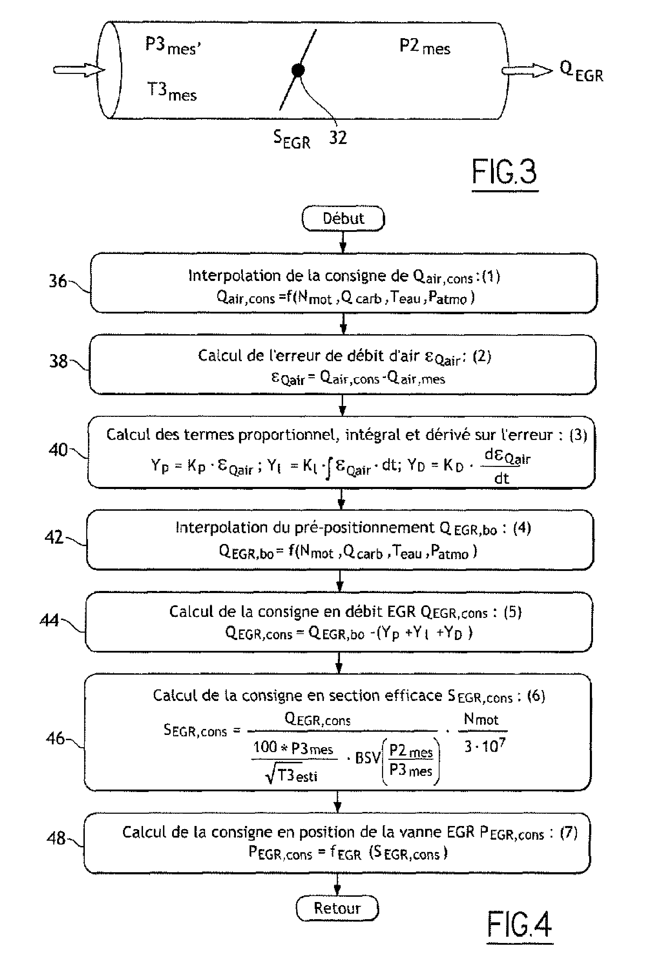

Ces grandeurs ont été illustrées schématiquement à la figure 3.

Pour le calcul de la section efficace de la vanne EGR correspondant à l'étape 46, il suffit d'inverser la formule de Barré Saint Venant après avoir converti la consigne de débit d'EGR en kilogrammes par seconde. On calcule donc la consigne en section efficace $S_{EGR,cons}$ par la formule suivante :

$$S_{EGR,cons} = \frac{Q_{EGR,cons}}{\frac{100 * P3_{mes}}{\sqrt{T3_{esti}}} \cdot BSV\left(\frac{P2_{mes}}{P3_{mes}}\right)} \cdot \frac{N_{mot}}{3\cdot 10^7}$$

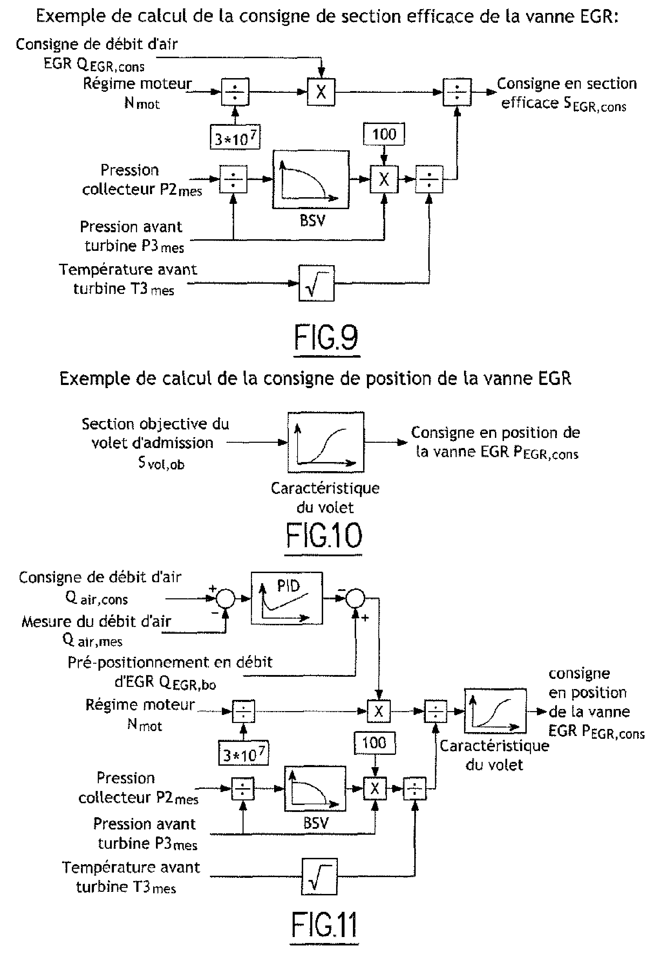

La figure 9 est un organigramme correspondant à ce calcul.

La dernière étape 48 de l'organigramme de la figure 4 consiste à calculer la consigne de position de la vanne d'EGR $P_{EGR,cons}$. La section efficace de la vanne EGR, $S_{EGR}$, est en général une fonction non linéaire de la position, $P_{EGR}$, de la vanne. Elle est interpôlée dans une table qui fait la correspondance entre la section et la position. Ces valeurs sont caractérisées en laboratoire de sorte que, pour chaque position de la vanne et avec des pressions différentielles et des températures constantes, on mesure le débit d'air. Puis en utilisant la formule de Barré Saint Venant simplifiée, on calcule la section efficace équivalente de la vanne EGR pour chaque position. Le schéma correspondant à cette étape 48 est celui de la figure 10.

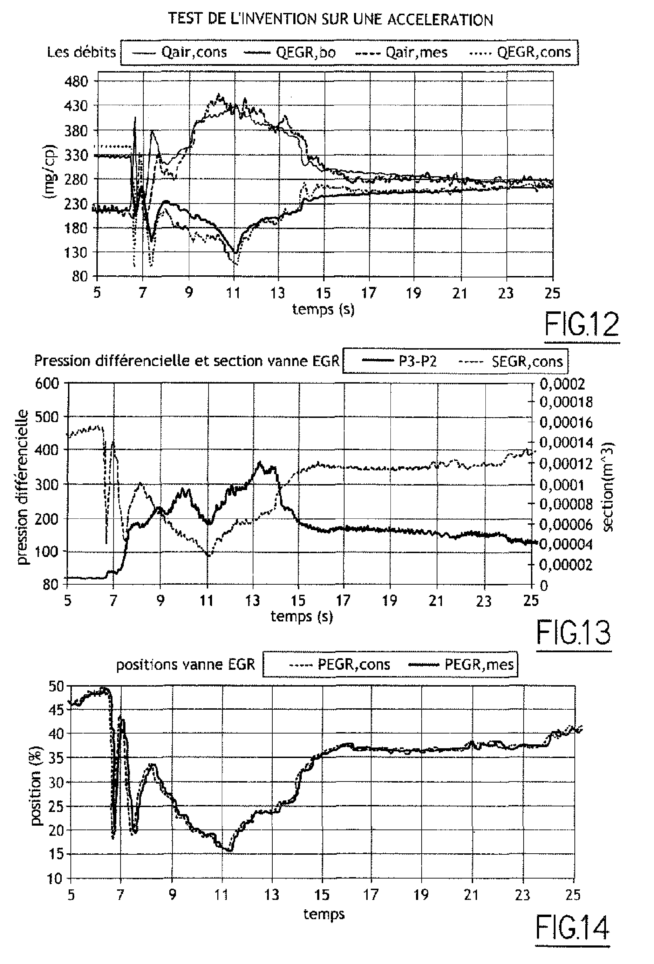

Une partie des calculs correspondant à cet enchaînement d'étapes a été illustrée à la figure 11.

On a illustré à la figure 12 des grandeurs obtenues expérimentalement avec le moteur selon l'invention, lors de l'accélération du véhicule sur 25 secondes. On observe sur la figure 12 que les quatre valeurs de débit indiquées $Q_{air}$, $Q_{EGR,bo}$, $Q_{air,mes}$ et $Q_{EGR,cons}$ vont progressivement en convergeant et surtout en se stabilisant, notamment dans la période entre 15 et 25 secondes. A la figure 13 a été illustrée l'évolution de la pression différentielle et de la section efficace de la vanne d'EGR. Là encore, une stabilisation se produit sur la même période. Enfin, on a illustré à la figure 14 l'évolution de la position de la vanne d'EGR qui se stabilise elle aussi à partir de 15 secondes.

On sait que le débit d'EGR pour une position donnée de la vanne EGR est normalement fonction de :

- la pression avant turbine $P3_{mes}$,
- la pression collecteur d'admission $P2_{mes}$,
- la température avant turbine $T3$.

Vis à vis du régulateur d'EGR, ces trois grandeurs sont considérées habituellement comme des perturbations. En effet, la moindre variation ou dérive sur l'une des ces trois valeurs va provoquer un écart de débit d'air car le prépositionnement est désadapté. Mais comme on l'a vu, l'invention propose une architecture de régulateur d'EGR prenant en compte les variations et dérives de ces trois grandeurs

L'invention permet de faire une régulation d'EGR robuste vis à vis de la pression collecteur, de la pression avant turbine et de la température avant turbine. Le régulateur transforme l'erreur de débit d'air frais en consigne de débit d'EGR. Puis en inversant la formule de Barré Saint Venant, nous obtenons une consigne de position. Le pré-positionnement est maintenant en débit d'EGR, et il est insensible aux dispersions et aux dérives. Avec la prise en compte des phénomènes physiques dans la boucle de commande de la vanne d'EGR, le système à asservir est maintenant linéaire. Sa mise au point est donc simplifiée.

L'introduction de la pression en amont de la turbine dans la boucle de régulation d'EGR permet de prendre en compte l'impact du filtre à particules et d'éliminer les interactions avec la régulation de suralimentation.

Avec les valeurs de la $P2_{mes}$, de la $P3_{mes}$ et de la $T3$, nous avons l'ensemble des valeurs caractérisant la chaîne de commande du débit d'EGR. Par conséquence, toutes les dispersions ou dérives impactent automatiquement la position de la vanne d'EGR sans que le régulateur n'agisse. Cette régulation d'EGR est donc robuste vis à vis des dispersions et des dérives de la boucle ouverte.

Avec les valeurs de la $P2_{mes}$, de la $P3_{mes}$ et de la $T3$, nous avons une linéarisation de la chaîne de contrôle du débit d'EGR. La mise au point du régulateur est donc plus simple et plus rapide.

Avec la valeur de la $P3_{mes}$, nous avons une correction automatique de la boucle ouverte en fonction de la masse de suies dans le filtre à particules. La régulation de suralimentation vient modifier la pression avant turbine $P3_{mes}$ en fonction du besoin en pression de suralimentation. Avec la valeur de la $P3_{mes}$, toutes les interactions de la régulation de suralimentation avec la régulation d'EGR sont éliminées.

Bien entendu, on pourra apporter à l'invention de nombreuses modifications sans sortir du cadre de celle-ci.

**Revendications**

1. Procédé de commande d'un moteur de véhicule, **caractérisé en ce qu'**on commande un débit de gaz d'échappement recirculés en fonction d'au moins l'une des données suivantes :

   - une pression (P2$_{mes}$) dans un collecteur (18) ;
   - une pression (P3$_{mes}$) en amont d'une turbine (12) ; et
   - une température de gaz (T3$_{estim}$) en amont de la turbine.

2. Procédé selon la revendication précédente, **caractérisé en ce qu'**on commande le débit en fonction d'un rapport entre la pression (P2$_{mes}$) dans le collecteur et la pression (P3$_{mes}$) en amont de la turbine.

3. Procédé selon l'une quelconque des revendications précédentes, **caractérisé en ce qu'**on calcule la température de gaz (T3$_{estim}$) en amont de la turbine.

4. Procédé selon l'une quelconque des revendications précédentes, **caractérisé en ce qu'**on mesure au moins l'une des pressions dans le collecteur (P2$_{mes}$) et en amont de la turbine (P3$_{mes}$).

5. Procédé selon l'une quelconque des revendications précédentes, **caractérisé en ce qu'**on mesure une pression différentielle (P3/2$_{mes}$) aux extrémités d'un conduit (24) de recirculation des gaz d'échappement.

6. Procédé selon l'une quelconque des revendications précédentes, **caractérisé en ce qu'**on commande le débit en fonction d'au moins l'une des données suivantes :

   - un régime du moteur (N$_{mot}$) ;
   - un débit de carburant (Q$_{carb}$) ;
   - une température d'eau du moteur (T$_{eau}$) ; et
   - une pression atmosphérique (P$_{atm}$).

7. Procédé selon l'une quelconque des revendications précédentes, **caractérisé en ce qu'**on calcule une valeur de consigne (Q$_{air,cons}$) de débit d'air frais dans le moteur.

8. Procédé selon l'une quelconque des revendications précédentes, **caractérisé en ce qu'**on mesure un débit d'air frais ($Q_{air,mes}$) dans le moteur.

9. Procédé selon l'une quelconque des revendications précédentes, **caractérisé en ce qu'**on mesure un débit d'air frais dans le moteur au moyen d'un capteur à fil chaud (10).

10. Procédé selon l'une quelconque des revendications précédentes, **caractérisé en ce qu'**on commande le débit de gaz en fonction d'une évolution d'une différence entre une valeur de consigne ($Q_{air,cons}$) et une valeur mesurée ($Q_{air,mes}$) concernant toutes deux un débit d'air frais dans le moteur.

11. Procédé selon l'une quelconque des revendications précédentes, **caractérisé en ce qu'**on commande le débit de gaz en fonction d'une valeur de prépositionnement ($Q_{EGR,bo}$) de débit de gaz d'échappement recirculés.

12. Procédé selon l'une quelconque des revendications précédentes, **caractérisé en ce qu'**on calcule une valeur de prépositionnement ($Q_{EGR,bo}$) de débit de gaz d'échappement recirculés en fonction d'au moins l'une des données suivantes :

- un régime du moteur ($N_{mot}$) ;
- un débit de carburant ($Q_{carb}$) ;
- une température d'eau du moteur ($T_{eau}$) ; et
- une pression atmosphérique ($P_{atm}$).

13. Procédé selon l'une quelconque des revendications précédentes, **caractérisé en ce qu'**on calcule une valeur de section efficace ($S_{EGR,cons}$) d'une vanne (32) de recirculation des gaz d'échappement.

14. Procédé selon la revendication précédente, **caractérisé en ce qu'**on calcule la valeur de section efficace ($S_{EGR,cons}$) au moyen d'une formule du type ;

$$S_{EGRcons} = a * \frac{Q_{EGRcons}}{\frac{P3_{mes}}{\sqrt{T3_{esti}}} \cdot BSV\left(\frac{P2_{mes}}{P3_{mes}}\right)} \cdot N_{mot}$$

où :

- a est une constante ;
- $Q_{EGR,cons}$ est une valeur de débit de gaz d'échappement recirculés ;
- $N_{mot}$ est un régime du moteur ; et
- BSV est une fonction prédéterminée.

15. Procédé selon l'une quelconque des revendications précédentes, **caractérisé en ce qu'**on calcule une consigne de position ($P_{EGR.cons}$) d'une vanne (32) de recirculation des gaz d'échappement.

16. Procédé selon la revendication précédente, **caractérisé en ce qu'**on calcule la consigne de position ($P_{EGR,cons}$) de la vanne au moyen de la formule :

$$P_{EGR,cons} = f_{EGR,cons}(S_{EGR,cons})$$

où

- $S_{EGR,cons}$ est une valeur de section efficace de la vanne ; et
- $f_{EGR,cons}$ est une fonction prédéterminée.

17. Moteur de véhicule comprenant des moyens de commande d'un débit de gaz d'échappement recirculés, **caractérisé en ce que** les moyens de commande sont agencés pour commander le débit en fonction d'au moins l'une des données suivantes :

- une pression (P2$_{mes}$) dans un collecteur (18) ;
- une pression (P3$_{mes}$) en amont d'une turbine (12) ; et
- une température de gaz (T3$_{estim}$) en amont de la turbine.

Régulation d'EGR avec mesures de P2, P3 et Qair

FIG.1

Régulation d'EGR avec mesures de P2, P3/2 et Qair

FIG.2

$P3_{mes}$,

$T3_{mes}$

$P2_{mes}$

$Q_{EGR}$

$S_{EGR}$ 32

## FIG.3

```
Début
```

36 — Interpolation de la consigne de $Q_{air,cons}$ : (1)
$Q_{air,cons} = f(N_{mot}, Q_{carb}, T_{eau}, P_{atmo})$

38 — Calcul de l'erreur de débit d'air $\varepsilon_{Qair}$ : (2)
$\varepsilon_{Qair} = Q_{air,cons} - Q_{air,mes}$

40 — Calcul des termes proportionnel, intégral et dérivé sur l'erreur : (3)
$Y_P = K_P \cdot \varepsilon_{Qair}$ ; $Y_I = K_I \cdot \int \varepsilon_{Qair} \cdot dt$; $Y_D = K_D \cdot \dfrac{d\varepsilon_{Qair}}{dt}$

42 — Interpolation du pré-positionnement $Q_{EGR,bo}$ : (4)
$Q_{EGR,bo} = f(N_{mot}, Q_{carb}, T_{eau}, P_{atmo})$

44 — Calcul de la consigne en débit EGR $Q_{EGR,cons}$ : (5)
$Q_{EGR,cons} = Q_{EGR,bo} - (Y_P + Y_I + Y_D)$

46 — Calcul de la consigne en section efficace $S_{EGR,cons}$ : (6)
$$S_{EGR,cons} = \dfrac{Q_{EGR,cons}}{\dfrac{100 * P3_{mes}}{\sqrt{T3_{esti}}} \cdot BSV\left(\dfrac{P2_{mes}}{P3_{mes}}\right)} \cdot \dfrac{N_{mot}}{3 \cdot 10^7}$$

48 — Calcul de la consigne en position de la vanne EGR $P_{EGR,cons}$ : (7)
$P_{EGR,cons} = f_{EGR}(S_{EGR,cons})$

```
Retour
```

## FIG.4

Exemple de calcul de la consigne de débit d'air frais:

Régime moteur

Débit carburant

Consigne de débit d'air moteur

Correction fonction de la température d'air moteur

Régime moteur

Débit carburant

Température d'air

X

−
+

Correction fonction de la pression atmosphérique

Régime moteur

Débit carburant

Pression atmosphérique

X

−
+

Consigne de débit d'air moteur

FIG.5

## Exemple de calcul du pré-positionnement en débit d'EGR:

Régime moteur

Débit carburant

Pré-positionnement en débit EGR sans correction

Régime moteur

Débit carburant

Température d'air

X

Correction fonction de la température d'air moteur

− +

Régime moteur

Débit carburant

Pression atmosphérique

X

Correction fonction de la pression atmosphérique

− +

Pré-positionnement en débit d'EGR $Q_{EGR,bo}$

## FIG.6

## Exemple de calcul de la consigne de débit d'EGR

Consigne de débit d'air $Q_{air,cons}$

Mesure du débit d'air $Q_{air,mes}$

+

−

PID

−

+

consigne en débit EGR $Q_{EGR,cons}$

Pré-positionnement en débit d'EGR $Q_{EGR,bo}$

## FIG.7

## Exemple d'estimation de la température avant turbine T3esti

Régime moteur

Débit carburant

Filtre du 1er ordre avec retard pur

Température avant turbine estimée

## FIG.8

Exemple de calcul de la consigne de section efficace de la vanne EGR:

Consigne de débit d'air
EGR $Q_{EGR,cons}$

Régime moteur
$N_{mot}$

$3*10^7$

Pression
collecteur $P2_{mes}$

Pression avant
turbine $P3_{mes}$

Température avant
turbine $T3_{mes}$

100

BSV

Consigne en section
efficace $S_{EGR,cons}$

## FIG.9

Exemple de calcul de la consigne de position de la vanne EGR

Section objective du
volet d'admission
$S_{vol,ob}$

Caractéristique
du volet

Consigne en position de
la vanne EGR $P_{EGR,cons}$

## FIG.10

Consigne de débit d'air
$Q_{air,cons}$

Mesure du débit d'air
$Q_{air,mes}$

Pré-positionnement en débit
d'EGR $Q_{EGR,bo}$

Régime moteur
$N_{mot}$

$3*10^7$

Pression
collecteur $P2_{mes}$

Pression avant
turbine $P3_{mes}$

Température avant
turbine $T3_{mes}$

PID

100

BSV

Caractéristique
du volet

consigne
en position
de la vanne
EGR $P_{EGR,cons}$

## FIG.11

## TEST DE L'INVENTION SUR UNE ACCELERATION

Les débits | —— Qair,cons  —— QEGR,bo  ---- Qair,mes  ····· QEGR,cons

FIG.12

Pression différencielle et section vanne EGR | —— P3-P2  ---- SEGR,cons

FIG.13

positions vanne EGR | ---- PEGR,cons  —— PEGR,mes

FIG.14

Office européen
des brevets

**RAPPORT DE RECHERCHE EUROPEENNE**

Numéro de la demande

EP 05 30 0489

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 196 28 235 A (NISSAN MOTOR) 16 janvier 1997 (1997-01-16) | 1,3-6, 12,13, 15-17 | F02D35/00 F02D41/00 F02D41/00 |
| Y | * figures 11,16-20 * * colonne 10, ligne 22-33 * * colonne 16, ligne 16 - colonne 17, ligne 29 * ----- | 2,14 | |
| X | EP 1 245 818 A (NISSAN MOTOR) 2 octobre 2002 (2002-10-02) * alinéas [0051], [0052], [0057], [0059] - [0064] * ----- | 1,4-13, 15-17 | |
| X | US 6 293 267 B1 (MALONEY PETER JAMES ET AL) 25 septembre 2001 (2001-09-25) * colonne 3, ligne 42 - colonne 4, ligne 58 * ----- | 1-6,12, 15-17 | |
| Y | US 5 974 870 A (ROESEL GERD ET AL) 2 novembre 1999 (1999-11-02) * colonne 9, ligne 25-40 * ----- | 2,14 | **DOMAINES TECHNIQUES RECHERCHES (IPC)** |
| A | US 6 035 639 A (MORAAL PAUL EDUARD ET AL) 14 mars 2000 (2000-03-14) * abrégé * * colonne 4, ligne 49 - colonne 5, ligne 35 * ----- | 7-11,14 | F02D |

Le présent rapport a été établi pour toutes les revendications

| Lieu de la recherche | Date d'achèvement de la recherche | Examinateur |
|---|---|---|
| La Haye | 22 novembre 2005 | Röttger, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

**EP 1 630 387 A1**

ANNEXE AU RAPPORT DE RECHERCHE EUROPEENNE
RELATIF A LA DEMANDE DE BREVET EUROPEEN NO.

EP 05 30 0489

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-11-2005

| Document brevet cité au rapport de recherche | | Date de publication | Membre(s) de la famille de brevet(s) | | Date de publication |
|---|---|---|---|---|---|
| DE 19628235 | A | 16-01-1997 | AUCUN | | |
| EP 1245818 | A | 02-10-2002 | US | 2002139361 A1 | 03-10-2002 |
| US 6293267 | B1 | 25-09-2001 | AUCUN | | |
| US 5974870 | A | 02-11-1999 | BR | 9708197 A | 27-07-1999 |
| | | | CN | 1214104 A | 14-04-1999 |
| | | | CZ | 9802926 A3 | 12-05-1999 |
| | | | WO | 9735106 A2 | 25-09-1997 |
| | | | EP | 0886725 A2 | 30-12-1998 |
| US 6035639 | A | 14-03-2000 | DE | 60002238 D1 | 28-05-2003 |
| | | | DE | 60002238 T2 | 06-11-2003 |
| | | | EP | 1024262 A2 | 02-08-2000 |

EPO FORM P0460

Pour tout renseignement concernant cette annexe : voir Journal Officiel de l'Office européen des brevets, No.12/82